(19) Europäisches Patentamt
European Patent Office
Office européen des brevets

(11) **EP 2 846 499 B1**

## (12) EUROPEAN PATENT SPECIFICATION

(45) Date of publication and mention
of the grant of the patent:
**11.01.2017 Bulletin 2017/02**

(51) Int Cl.:
*H04L 12/58* ^(2006.01)    *G06F 17/30* ^(2006.01)

(21) Application number: **13306222.4**

(22) Date of filing: **06.09.2013**

(54) **Method And Device For Classifying A Message**

Verfahren und Vorrichtung zur Klassifizierung einer Nachricht

Procédé et dispositif permettant de classifier un message

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.03.2015 Bulletin 2015/11**

(73) Proprietor: **ALCATEL LUCENT**
**92100 Boulogne-Billancourt (FR)**

(72) Inventors:
• **Milioris, Dimitros**
**91620 Nozay (FR)**
• **Jacquet, Philippe**
**91620 Nozay (FR)**

(74) Representative: **ALU Antw Patent Attorneys**
**Intellectual Property and Standards**
**Copernicuslaan 50**
**2018 Antwerp (BE)**

(56) References cited:
**WO-A2-2012/068561**

• **PHAN X-H ET AL: "Learning to classify short and sparse text & web with hidden topics from large-scale data collections", WWW '08 PROCEEDING OF THE 17TH INTERNATIONAL CONFERENCE ON WORLD WIDE WEB, APRIL 21-25, 2008, BEIJING, CHINA, ACM,, 21 April 2008 (2008-04-21), pages 91-100, XP002635089, DOI: 10.1145/1367497.1367510**

**Description**

FIELD OF THE INVENTION

The present invention relates to the field of data management. In particular, the present invention relates to a method and a device for classifying a message.

BACKGROUND

Known techniques for classifying text messages are based on the use of keywords. However, these techniques may not provide satisfying results because of wrong or distorted usage of the keywords, or because of implicit references in previous text or messages.

Other solutions for classifying text messages use machine learning techniques. Machine learning techniques are generally heavy and complex and cannot be used for real time text classification of large quantities of messages. Furthermore, machine learning techniques have to be manually initiated.

A metric for determining the similarity between two text messages called Joint Complexity has been proposed. The Joint Complexity of two text messages may be efficiently calculated by using suffixes trees.

WO 2012/068561 discloses a relevant piece of art.

SUMMARY

It is thus an object of embodiments of the present invention to propose a method and a device for classifying a message, which do not show the inherent shortcomings of the prior art. A message may be classified based on a similarity score between the message and reference data.

Accordingly, embodiments relate to a method according to claim 1.

Correlatively, embodiments relate to a device accoding to claim 5.

The similarity score may be used for classifying the first text message. Accordingly, embodiments of the invention relates to a method for classifying a first message in one class of a set of classes, according to claim 2.

Embodiments also relate to a computer program including instructions adapted to perform one of the methods above when said program is executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

　　Figure 1 is a flowchart of a preprocessing phase of a method for classifying a message, executed by a message classifying device,
　　Figure 2 is a flowchart of a run phase of the method for classifying a message, and
　　Figure 3 is a structural view of a message classifying device for executing the method of figures 1 and 2.

DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

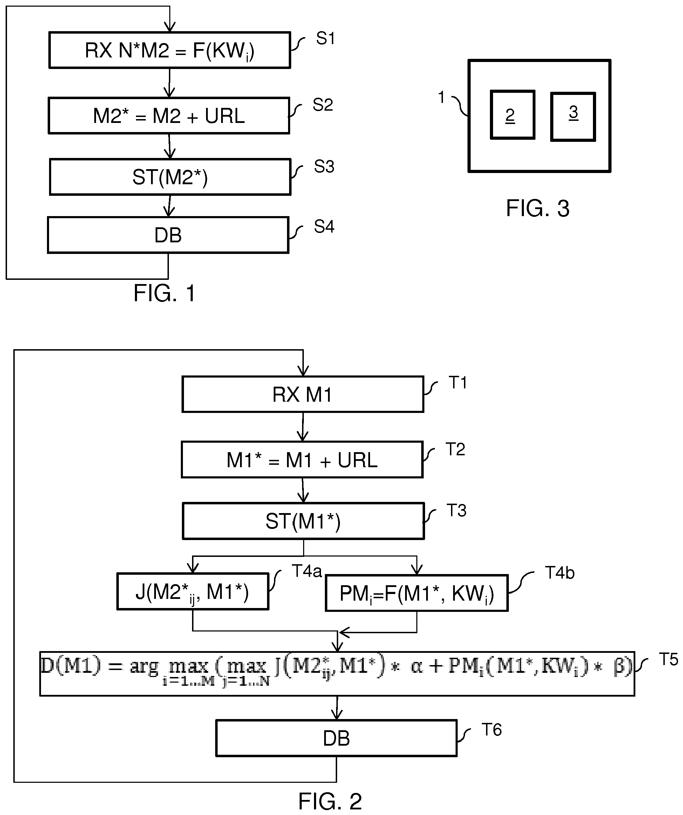

The method of figures 1 and 2 aims at classifying a message M1 in a class D(M1) among a set of M classes $D_i$, with i ranging from 1 to M. This method is executed by a message classifying device 1, shown on figure 3.

**Figure 1** is a flowchart of a preprocessing phase of the method, allowing the initial construction of a training database DB.

Each class $D_i$ is associated with a set of keywords $KW_i$. A set of keywords $KW_i$ contains one or more keywords.

Initially, the message classifying device 1 obtains N messages M2 corresponding to a set of keywords $KW_i$ (step S1). For example, the message classifying device 1 sends a request including the set of keywords $KW_i$ to a message sharing server, and receives N messages M2 in response to the request.

Some or all of the messages M2 may include a shortened URL associated with another URL. A shortened URL associated with another URL is an URL which is shorter than the other URL and which points to the same address as the other URL, for example through a redirection mechanism. For the messages M2 which include such shortened URL, the message classifying device 1 determines a modified message M2* by adding the other URL to the message M2 (step S2): M2* = M2 + URL. For example, the URL may be concatenated with the message M2, inserted after the shortened URL, or may replace the shortened URL. The other URL may be extracted from the response provided by the message sharing server received at step S1, if this response includes the other URLs. Alternatively, the other URL may be obtained based on the redirection mechanism of the shortened URL.

Then, the message classifying device 1 determines the suffixes trees of the modified messages M2*, or of the message M2 if no shortened URL is included (step S3): ST(M2*). As is known to the skilled person, a suffix tree is a data structure which allows representing all the suffixes of a sequence (for example a message) in a tree-like manner.

Finally, the modified messages M2* (or the original message M2 if no shortened URL is included) and the corresponding suffixes trees are stored in the database DB, associated with the class $D_i$ and the set of keywords $KW_i$ (step S4).

Steps S1 to S4 are performed for each class $D_i$. Therefore, the content of the database DB may be used as reference for classifying a message M1 in one of the classes $D_i$, as described with reference to figure 2.

Note that the construction of the database DB is performed automatically based on the keywords. Once the keywords have been defined, it does not require manually assigning a message M2 to a class $D_i$.

**Figure 2** is a flowchart of a run phase of the method, allowing the classification of a message M1 in one of the classes $D_i$.

Initially, the message classifying device 1 receives a message M1 to be classified (step T1). For example, a message sharing server provides a flow of messages M1 which match a criteria to the message classifying device 1.

The message M1 may include a shortened URL associated with another URL. As explained previously, a shortened URL associated with another URL is a URL which is shorter than the other URL and which points to the same address as the other URL. If the message M1 includes such shortened URL, the message classifying device 1 determines a modified message M1* by adding the other URL to the message M1 (step T2): M1* = M1 + URL.

Then, the message classifying device 1 determines the suffixes tree of the modified message M1* (or of the message M1 if no shortened URL is included) (step T3): ST(M1*).

At step T4a, the message classifying device 1 determines, for the messages $M2_{ij}$ of the classes $D_i$ contained in the database DB, the joint complexity J of a message M2 and the message M1. More precisely, the joint complexity is determined based on the modified messages $M2^*_{ij}$ and M1*: $J(M2^*_{ij}, M1^*)$. The joint complexity of two sequences (or messages) is the number of common distinct factors in two sequences, and can be used as a metric representative of the similarity of the two sequences. The joint complexity can be computed efficiently by using the suffixes trees of the sequences. For reference see Jacquet Ph., Milioris D. and Szpankowski W., "classification of Markov Sources Through Joint String Complexity: Theory and Experiments". The maximum joint complexities $MJC_i = \max_{j=1...N} J(M2^*_{ij}, M1^*)$ represent the similarity between the message M1 and each of the classes $D_i$.

At step T4b, the message classifying device 1 determines the pattern matching scores $PM_i$ of the message M1 for the classes $D_i$. More precisely, the pattern matching score $PM_i$ is determined based on the modified message M1* and the set of keywords $KW_i$: $PM_i = F(M1^*, KW_i)$. The pattern matching score $PM_i$ is the number of keywords of the set of keywords $KW_i$, which are actually present in the modified message M1* and is another representation of the similarity between the message M1 and the class Di.

Then, the message classifying device 1 classifies the message M1 in one of the classes $D_i$, based on the joint complexities J and the pattern matching scores $PM_i$ determined at steps T4a and T4b (step T5). For example, the message classifying device 1 selects the class $D_i$ which maximizes the weighted sum of the maximum joint complexity $MJC_i$ and the pattern matching score $PM_i$:

$$D(M1) = \arg \max_{i=1...M} (\alpha \, MJC_i + \beta \, PM_i)$$

wherein $\alpha$ and $\beta$ are weight parameters.

Finally, the database DB is updated (step T6). For example, the message M1* is inserted, with its suffixes tree ST(M1*), in the class $D_i$ determined at step T5, and the oldest message of the class is removed from the database DB.

The steps of figure 2 may be repeated for successive incoming messages M1, thereby allowing the classification of a flow of messages. Since computing the joint complexity of two messages by using suffixes trees may be performed efficiently, this classification may be performed in real time.

In the method of figure 1 and 2, a message M1 is classified by determining a similarity score J between the message M1 and a message M2 associated with a class $D_i$, and another similarity score $PM_i$ between the message M1 and a set of keywords $KW_i$ associated with the class $D_i$. However, in case the message M1 includes a shortened URL, the associated normal URL is added and the similarity score is determined in function of the modified message M1*. Since a normal URL typically includes more relevant information than a shortened URL, this improves the quality of the classification.

For example, a message M1 *"Better late than never! bit.ly/1234"* is difficult to classify correctly because of lack of context. However, if the URL www.newspaper.com/politics/Parliament_finally_approves_law associated with the shortened URL bit.ly/1234 is added to the message M1, it will more likely be classified in the class "politics".

Similarly, the determination of a modified message M2* helps the correct classification of messages.

In some embodiments, the messages M1 and M2 are tweets from the social network Twitter. Tweets often include shortened URL. There may be defined M = 5 classes $D_i$, corresponding to typical sections of a news provider, for example politics, economics, sports, technology and lifestyle. At step S1, messages M2 may be obtained by using requests in the Twitter API (Application Programming Interface). For example, N = 1000 messages M2 (or tweets) for each class $D_i$ are obtained. At step T1, the message M1 may also be received in response to a request to the Twitter API. The tweets are provided in the format .json, which is the basic format delivered by the Twitter API. If a tweet includes a shortened URL, the associated (long) URL is included in the .json format and may be extracted for determining the modified message M1* or M2*, which may be referred to as an Augmented Tweet.

Given the growing numbers of messages shared on Twitter and other social networks, classifying messages may have various useful applications: Traffic prediction for media consumption, trend prediction in technology, business or finance, identifying source of information and relations, spam and advertisement detection...

**Figure 3** is a structural view of a message classifying device 1 for executing the method of figure 1 and 2. The message classifying device 1 has the material architecture of a computer and comprises a processor 2 and a memory 3. The processor 2 is capable of executing computer programs stored in the memory 3. In one embodiment, the method of figures 1 and 2 corresponds to the execution of such a computer program.

The method of figures 1 and 2 includes steps allowing the determination of a similarity score $J(M2^*_{ij}, M1^*)$ or $PM_i(M1)$ between the message M1 and reference data (another message M2 or the set of keywords $KW_i$). Therefore, embodiments also relate to a method for determining a similarity score. Furthermore, the message classifying device 1 is an example of a device for determining a similarity score according to embodiments.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining α similarity score (J, $PM_i$) between α first message (M1) and reference data (M2, $KW_i$), executed by α similarity score determining device (1), comprising:

   - determining (T2) α modified first message (M1*) by adding an URL associated with α shortened URL contained in the first message (M1) to the first message, wherein α shortened URL associated with another URL is an URL which is shorter than the other URL and which points to the same address as the other URL,
   - determining (T4α, T4b) said similarity score (J, $PM_i$) in function of said modified first message (M1*) and of said reference data, said reference data include α second message (M2), the method comprising determining (S2) α modified second message (M2*) by adding an URL associated with α shortened URL contained in the second message (M2) to the second message, said similarity score (J) being determined in function of said modified second message (M2*),

   **characterised in that** said similarity score (J) is determined in function of α joint complexity of the modified first message (M1*) and the modified second message (M2*), wherein said joint complexity is determined by using suffixes trees of the modified first message (M1*) and of the modified second message (M2*).

2. Method for classifying α first message (M1) in one class of α set of classes, executed by α message classifying device (1), comprising:

   - determining similarity scores (J, $PM_i$) between said first message (M1) and reference data (M2, $KW_i$) associated with respective classes, according to the method of claim 1, and
   - determining (T5) said one class in function of said similarity scores.

3. Method according to claim 2, comprising obtaining (S1) said second messages (M2) in function of α set of keywords ($KW_i$).

4. Computer program (P) including instructions adapted to perform the method according to one of claims 1 to 3 when said program is executed by α computer.

**5.** Device for determining α similarity score (J, PM$_i$) between α first message (M1) and reference data (M2, KW$_i$), comprising:

- means (2, 3) for determining α modified first message (M2*) by adding an URL associated with α shortened URL contained in the first message (M1) to the first message, wherein α shortened URL associated with another URL is an URL which is shorter than the other URL and which points to the same address as the other URL,
- means (2, 3) for determining said similarity score (J, PM$_i$) in function of said modified first message (M1*) and of said reference data, said reference data include α second message (M2), the device comprising means for determining α modified second message (M2*) by adding an URL associated with α shortened URL contained in the second message (M2) to the second message, said similarity score (J) being determined in function of said modified second message (M2*), **characterised in that** said similarity score (J) is determined in function of α joint complexity of the modified first message (M1*) and the modified second message (M2*), wherein said joint complexity is determined by using suffixes trees of the modified first message (M2*) and of the modified second message (M2*).

**Patentansprüche**

**1.** Verfahren zur Bestimmung eines Ähnlichkeitsfaktors (J, PM$_i$) zwischen einer ersten Nachricht (M1) und Referenzdaten (M2, KW$_i$), ausgeführt von einer Vorrichtung (1) zur Bestimmung eines Ähnlichkeitsfaktors, umfassend:

- Bestimmen (T2) einer geänderten ersten Nachricht (M1*) durch Hinzufügen einer URL in Verbindung mit einer gekürzten URL, die in der ersten Nachricht (M1) enthalten ist, zu der ersten Nachricht, wobei eine gekürzte URL in Verbindung mit einer anderen URL eine URL ist, die kürzer ist als die andere URL und die zu der gleichen Adresse führt wie die andere URL,
- Bestimmen (T4a, T4b) des besagten Ähnlichkeitsfaktors (J, PM$_i$) in Abhängigkeit von der besagten geänderten ersten Nachricht (M1*) und von den besagten Referenzdaten, wobei die besagten Referenzdaten eine zweite Nachricht (M2) umfassen, wobei das Verfahren das Bestimmen (S2) einer geänderten zweiten Nachricht (M2*) durch Hinzufügen einer URL in Verbindung mit einer gekürzten URL, die in der zweiten Nachricht (M2) enthalten ist, zu der zweiten Nachricht umfasst, wobei der besagte Ähnlichkeitsfaktor (J) in Abhängigkeit von der besagten geänderten zweiten Nachricht (M2*) bestimmt wird,

**dadurch gekennzeichnet, dass**
der besagte Ähnlichkeitsfaktor (J) in Abhängigkeit von einer gemeinsamen Komplexität der geänderten ersten Nachricht (M1*) und der geänderten zweiten Nachricht (M2*) bestimmt wird,
wobei die besagte gemeinsame Komplexität durch Verwenden von Suffixbäumen der geänderten ersten Nachricht (M1*) und der geänderten zweiten Nachricht (M2*) bestimmt wird.

**2.** Verfahren zur Klassifizierung einer ersten Nachricht (M1) in eine Klasse aus einer Reihe von Klassen, ausgeführt von einer Vorrichtung (1) zur Nachrichtenklassifizierung, umfassend:

- Bestimmen von Ähnlichkeitsfaktoren (J, PM$_i$) zwischen der besagten ersten Nachricht (M1) und Referenzdaten (M2, KW$_i$) in Verbindung mit jeweiligen Klassen gemäß dem Verfahren nach Anspruch 1, und
- Bestimmen (T5) der besagten einen Klasse in Abhängigkeit von den besagten Ähnlichkeitsfaktoren.

**3.** Verfahren nach Anspruch 2, umfassend das Erhalten (S1) der besagten zweiten Nachrichten (M2) in Abhängigkeit von einer Reihe von Schlüsselwörtern (KW$_i$).

**4.** Computerprogramm (P), umfassend Anweisungen, die angepasst sind zum Durchführen des Verfahrens nach einem der Ansprüche 1 bis 3, wenn das besagte Programm von einem Computer ausgeführt wird.

**5.** Vorrichtung zur Bestimmung eines Ähnlichkeitsfaktors (J, PM$_i$) zwischen einer ersten Nachricht (M1) und Referenzdaten (M2, KW$_i$), umfassend:

- Mittel (2, 3) zum Bestimmen einer geänderten ersten Nachricht (M1*) durch Hinzufügen einer URL in Verbindung mit einer gekürzten URL, die in der ersten Nachricht (M1) enthalten ist, zu der ersten Nachricht, wobei eine gekürzte URL in Verbindung mit einer anderen URL eine URL ist, die kürzer ist als die andere URL und die zu der gleichen Adresse führt wie die andere URL,
- Mittel (2, 3) zum Bestimmen des besagten Ähnlichkeitsfaktors (J, PM$_i$) in Abhängigkeit von der besagten geänderten ersten Nachricht (M1*) und von den besagten Referenzdaten,

wobei die besagten Referenzdaten eine zweite Nachricht (M2) umfassen, wobei die Vorrichtung

Mittel zum Bestimmen einer geänderten zweiten Nachricht (M2*) durch Hinzufügen einer URL in Verbindung mit einer gekürzten URL, die in der zweiten Nachricht (M2) enthalten ist, zu der zweiten Nachricht umfasst, wobei der besagte Ähnlichkeitsfaktor (J) in Abhängigkeit von der besagten geänderten zweiten Nachricht (M2*) bestimmt wird, **dadurch gekennzeichnet, dass**

der besagte Ähnlichkeitsfaktor (J) in Abhängigkeit von einer gemeinsamen Komplexität der geänderten ersten Nachricht (M1*) und der geänderten zweiten Nachricht (M2*) bestimmt wird, wobei die besagte gemeinsame Komplexität durch Verwenden von Suffixbäumen der geänderten ersten Nachricht (M1*) und der geänderten zweiten Nachricht (M2*) bestimmt wird.

## Revendications

1. Procédé pour déterminer un score de similarité (J, $PM_i$) entre un premier message (M1) et des données de référence (M2, $KW_i$), exécuté par un dispositif de détermination de score de similarité (1), comprenant les étapes suivantes :

    - déterminer (T2) un premier message modifié (M1*) en ajoutant une URL associée à une URL raccourcie contenue dans le premier message (M1) au premier message, une URL raccourcie associée à une autre URL étant une URL qui est plus courte que l'autre URL et qui pointe vers la même adresse que l'autre URL,
    - déterminer (T4a, T4b) ledit score de similarité (J, $PM_i$) en fonction dudit premier message modifié (M1*) et desdites données de référence,

    lesdites données de référence incluent un second message (M2), le procédé comprenant la détermination (S2) d'un second message modifié (M2*) en ajoutant une URL associée à une URL raccourcie contenue dans le second message (M2) au second message, ledit score de similarité (J) étant déterminé en fonction dudit second message modifié (M2*), **caractérisé en ce que**
    ledit score de similarité (J) est déterminé en fonction d'une complexité conjointe du premier message modifié (M1*) et du second message modifié (M2*), ladite complexité conjointe étant déterminée en utilisant des arbres de suffixes du premier message modifié (M1*) et du second message modifié (M2*).

2. Procédé pour classifier un premier message (M1) dans une classe d'un ensemble de classes, exécuté par un dispositif de classification de message (1), comprenant les étapes suivantes :

    - déterminer des scores de similarité (J, $PM_i$)

entre ledit premier message (M1) et des données de référence (M2, $KW_i$) associés à des classes respectives, selon le procédé de la revendication 1, et
    - déterminer (T5) ladite une classe en fonction desdits scores de similarité.

3. Procédé selon la revendication 2, comprenant l'obtention (S1) desdits seconds messages (M2) en fonction d'un ensemble de mots-clés ($KW_i$).

4. Programme informatique (P) incluant des instructions adaptées pour effectuer le procédé selon l'une des revendications 1 à 3 lorsque ledit programme est exécuté par un ordinateur.

5. Dispositif pour déterminer un score de similarité (J, $PM_i$) entre un premier message (M1) et des données de référence (M2, $KW_i$), comprenant :

    - des moyens (2, 3) pour déterminer un premier message modifié (M1*) en ajoutant une URL associée à une URL raccourcie contenue dans le premier message (M1) au premier message, une URL raccourcie associée à une autre URL étant une URL qui est plus courte que l'autre URL et qui pointe vers la même adresse que l'autre URL,
    - des moyens (2, 3) pour déterminer ledit score de similarité (J, $PM_i$) en fonction dudit premier message modifié (M1*) et desdites données de référence,

    lesdites données de référence incluent un second message (M2), le dispositif comprenant des moyens pour déterminer un second message modifié (M2*) en ajoutant une URL associée à une URL raccourcie contenue dans le second message (M2) au second message, ledit score de similarité (J) étant déterminé en fonction dudit second message modifié (M2*), **caractérisé en ce que**
    ledit score de similarité (J) est déterminé en fonction d'une complexité conjointe du premier message modifié (M1*) et du second message modifié (M2*), ladite complexité conjointe étant déterminée en utilisant des arbres de suffixes du premier message modifié (M1*) et du second message modifié (M2*).

RX N*M2 = F(KW$_i$) — S1

M2* = M2 + URL — S2

ST(M2*) — S3

DB — S4

FIG. 1

1 — [ 2 ] [ 3 ]

FIG. 3

RX M1 — T1

M1* = M1 + URL — T2

ST(M1*) — T3

J(M2*$_{ij}$, M1*) — T4a

PM$_i$=F(M1*, KW$_i$) — T4b

$$D(M1) = \arg \max_{i=1\ldots M} \left( \max_{j=1\ldots N} J\left(M2_{ij}^*, M1^*\right) * \alpha + PM_i(M1^*, KW_i) * \beta \right)$$ — T5

DB — T6

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012068561 A

**Non-patent literature cited in the description**

- **JACQUET PH. ; MILIORIS D. ; SZPANKOWSKI W.** *classification of Markov Sources Through Joint String Complexity: Theory and Experiments*